Europäisches Patentamt

European Patent Office

Office européen des brevets

(11) Publication number: **0 164 021**
A2

# EUROPEAN PATENT APPLICATION

(21) Application number: 85106273.7

(22) Date of filing: 22.05.85

(51) Int. Cl.⁴: **B 65 H 75/14,** B 65 H 75/28,
B 29 C 45/26
// B29L23:00, B29L24:00

(30) Priority: 04.06.84 IT 2124884

(71) Applicant: **CUCIRINI TRE STELLE MANIFATTURA DI
SETTALA S.p.A.,** Via F. Faccio, 19, I-20161 Milano (IT)

(43) Date of publication of application: **11.12.85**
Bulletin 85/50

(72) Inventor: **Radice, Luigi,** Via Crivelli 15/1, I-20122 Milano
(IT)

(84) Designated Contracting States: **AT BE CH DE FR GB LI
LU NL SE**

(74) Representative: **Faggioni, Giovanmaria, Dr. et al,
Fumero-Studio Consulenza Brevetti
Widenmayerstrasse 4/I, D-8000 München 22 (DE)**

(54) Reel for sewing threads of molded plastic material and mold for its production.

(57) The present invention concerns a reel for sewing
threads, formed of an outer tubular body terminating, at
least at one of its ends, with a flange collar, and of an inner
tubular body, coaxial to the first body and terminating, beyond said collar, with a base shortly spaced from the collar
in an axial sense, the two tubular bodies being reciprocally
connected by interposed radial walls, a slit for introducing
the thread being formed between the base and the collar
and opposite toothings projecting across said slit for locking
said thread therein.

The invention also concerns a mold for the production of
such a reel by molding of plastic material.

**0 164 021**

"REEL FOR SEWING THREADS OF MOLDED PLASTIC MATERIAL AND MOLD FOR ITS PRODUCTION"

--oOo--

The object of the present invention is a reel for threads, and particularly sewing threads, having an improved structure compared to those of the known reels, especially for what concerns the thread retaining means. The invention also relates to a mold for producing said reel by molding of plastic material.

A reel equipped with thread retaining means was already proposed by the same Applicant in the Italian Utility Model No. 156.815 of 3rd March 1972. Such means are meant to prevent an accidental and undesirable unwinding of the thread, once the reel has been opened, freed from its wrapping and its use has been started. As known, this problem is particularly felt in the case of modern sewing threads which, being at least partly formed with synthetic fibres, have a certain stiffness which is generally sufficient to cause a progressive unwinding of the thread end left free.

In the aforementioned Utility Model, said problem was solved by forming the reel with a cylindrical body, a widened base and an annular collar shortly spaced from the base, and forming moreover a first series of adjacent, parallel ribs, projecting from said base, and a second series of opposed, parallel ribs, projecting from the collar and partially penetrating into the spaces between said first ribs, the opposing and partially interpenetrating surfaces of said ribs forming a labyrinth for retaining the thread.

Practical tests have however allowed to ascertain that such a thread retaining system is not always perfectly capable of retaining any type and any size of thread. Moreover, it is quite difficult to obtain such a reel by molding of plastic material, as it requires the use of a fairly delicate and costly mold.

The object of the present invention is to propose a reel of improved structure, having particularly efficient retaining means for any type and size of thread and being especially easy to use, thanks above all to the symmetrical configuration of its ends. A further object of the invention is to propose a mold of simple structure, comprising a few pieces and allowing a rational production of the aforementioned reel.

This result is obtained mainly due to the fact that the reel is formed of an outer tubular body terminating, at least at one of its ends, with a flange collar, and of an inner tubular body, coaxial to the first body and terminating, beyond said collar, with a base shortly spaced from the collar in an axial sense, the two tubular bodies being reciprocally connected by interposed radial walls, a slit for introducing the thread being formed between the base and the collar and opposite toothings projecting across said slit for locking said thread therein.

According to the present invention, the mold allowing to obtain such a reel comprises a female element, which determines the outer surface of the reel, and two male elements to be introduced through the reel axis, from opposite ends thereof, a first male element being formed of a central cylinder, determining the inner surface of the inner tubular body of the reel, and of at least one rod along the side of said cylinder having a part of circle ring section, and a second male element being formed of at least one rod having a part of circle ring section, the over-all circumferential development of the alternate rods of the first and of the second male element being of 360°, including the free intermediate section corresponding to the radial walls of the reel.

Further characteristics and advantages of the reel and of the mold according to the present invention will anyhow be more evident from the following description of a preferred embodiment thereof, illustrated by mere way of example in the accompanying drawings, in which:

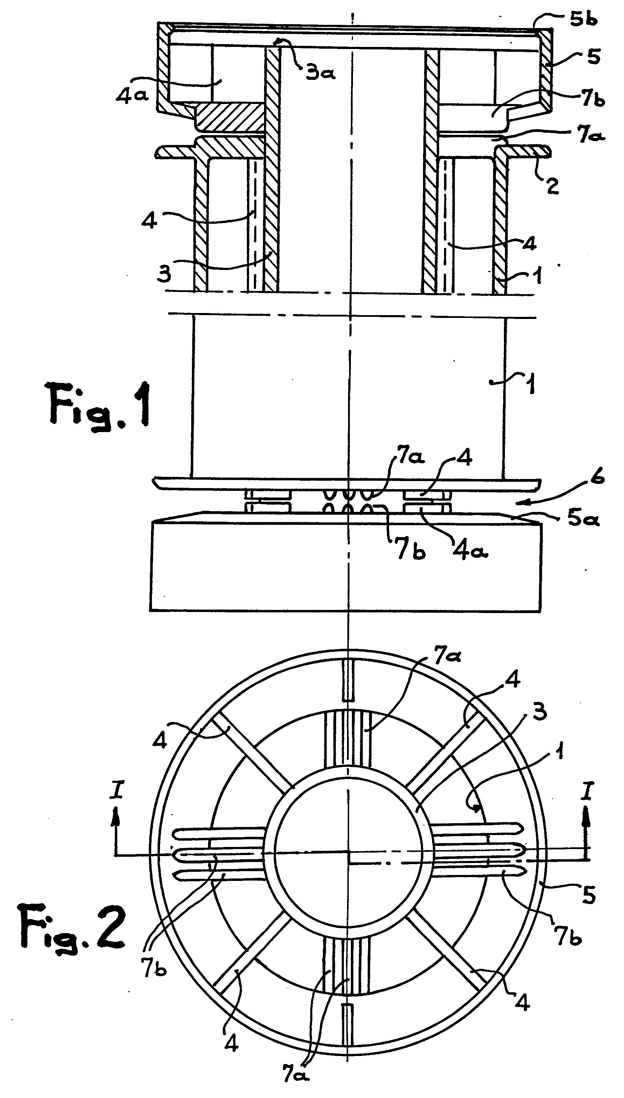

Fig. 1 is a lateral part section view, along the line I-I of figure 2, of a reel according to the present invention;

Fig. 2 is a head view of said reel, seen from the top in respect of figure 1; and

· Figs. 3a and 3b are diagrammatic axial section views of the mold, at 90° one in respect of the other.

As shown, the reel according to the invention is formed of an outer tubular body 1 ending, at the two ends, with a flange collar 2. Within the body 1 and coaxial thereto, there is arranged an inner tubular body 3, the opposite ends of which extend beyond the collars 2.

The tubular bodies 1 and 3 are kept coaxially connected by radial walls 4, which in the drawing are shown to be positioned according to two perpendicular diameters, but which could of course be differently arranged. Base elements 5 are fixed onto the ends of the body 3 extending beyond the collars 2, also by way of radial walls 4a, coplanar with the walls 4.

The base 5 has a slightly conical surface 5a on its side facing the inner part of the reel, a slit 6 being formed between said surface 5a and the opposing surface of the collar 2, for introducing the thread therein.

Toothings 7a, 7b, for retaining the thread, are provided across the slit 6. The toothings 7a are formed as parallel, radial bridge ties, extending between the body 3 and the inner rim of the collar 2, while the toothings 7b, also formed as parallel radial bridge ties, extend between the body 3 and the inner rim of the conical surface 5a, and lie opposite and shortly spaced from the first toothings in an axial sense.

Each pair of toothings 7a, 7b, is formed approximately at the centre of the space included between two successive radial walls. Moreover, when a pair of toothings 7a, 7b, occupies a given space in correspondence of one end of the reel, the other end of the same space is free from toothings. Preferably, the pairs of toothings lying in adjacent spaces, alternate from one end to the other of the reel; in the arrangement shown in the drawings, where the whole cylindrical space is divided into four parts A, B, C and D, by four radial walls 4, the toothings 7a, 7b, of the diametrically opposite spaces A and C, lie at one end of the reel, while the toothings of the spaces B and D, positioned at 90° in respect of the previous ones, lie at the opposite end of the reel.

Finally, the end rim of each base 5 has a slight thickening 5b forming an inward rib, while the end rim 3a of the body 3 ends slightly set back in respect of the surface rim 5a of the base 5, to perform the function better described hereinafter.

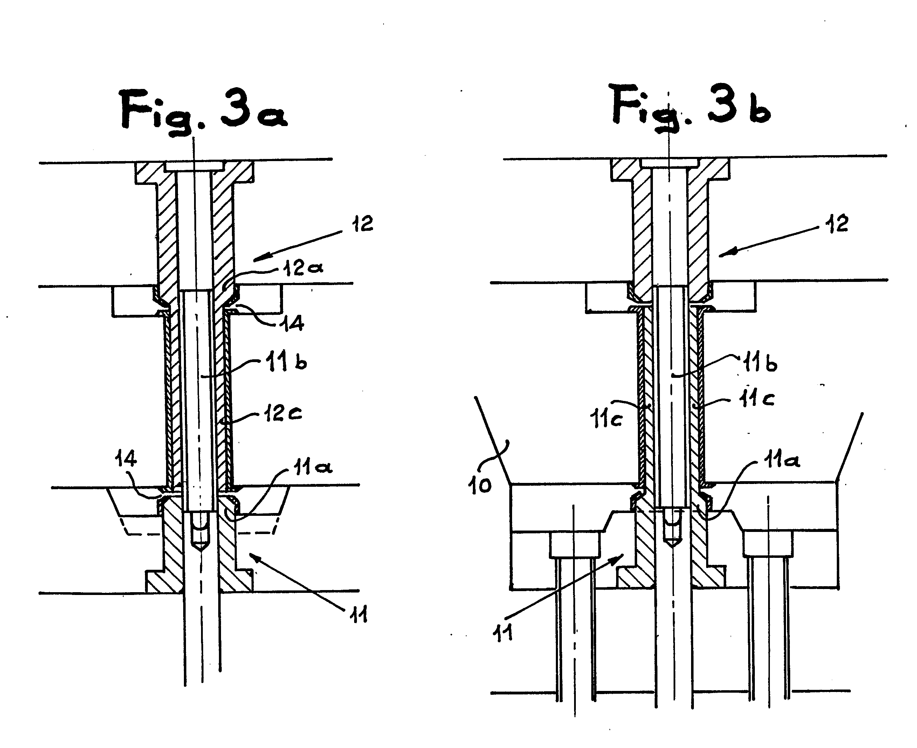

The aforedescribed reel lends itself very well for production by molding of plastic material, with a very simple mold as that diagrammatically illustrated in figure 3. Said mold essentially comprises a female element 10, which determines the outer surface of the reel. Two male elements 11 and 12 are introduced into said female element 10 from opposite ends, with a movement along the reel axis.

The male element 11 is formed of a base 11a, from which upwardly project a central cylindrical body 11b and a pair of rods 11c (seen only in figure 3b), each rod having a part of circle ring section of about 90° and being positioned diametrically opposite along the side of the body 11b. The male element 12 is formed of a base 12a, symmetrical and opposite to the base 11a, from which downwardly project a pair of rods 12c (seen only in figure 3a), which are fully similar to the rods 11c and lie diametrically opposite and offset by 90° in respect thereof.

The body 11b of the male element 11 determines the inner surface of the inner tubular body 3 of the reel. The rods 11c and

12c, having a circumferential development of 360° (including the free intermediate section corresponding to the thickness of the walls 4), determine the outer surface of the tubular body 3, the inner surface of the tubular body 1, as well as the surfaces of the radial walls 4. The bases 11a and 12a of the male elements 11 and 12 determine the inner surface of the bases 5 of the reel.

The toothings 7a, 7b, are formed by radial grooves provided at the top of the rods 11c and 12c, in positions exactly opposite to the bases 11a and 12a (not shown in the drawing), with the interposition of a lamina insert 14 forming part of the female element 10. The same lamina insert 14 acts as separation between each wall 4 and the wall 4a coplanar thereto, forming the opposite end parts of said walls in a similar way to the toothings 7a, 7b.

The above description evidences the extreme simplicity and functionality of the mold according to the invention, which allows instead to produce a reel having a relatively complicated structure, particularly for the presence of the two perfectly symmetrical ends forming a collar and a widened base.

As already mentioned, the present invention provides important advantages:

- first of all, the slit 6 formed between the collar 2 and the base 5 is very deep and this, in cooperation with the toothings 7a, 7b, as well as with the opposed ends of the walls 4, 4a, guarantees a perfect retaining of the thread, whatever its size or stiffness;

- moreover, the symmetrical configuration of the reel eliminates any problems connected with the introduction of an empty reel on automatic thread winding machines, or with the introduction of a full reel on machines utilizing said thread;

- finally, the presence of the ribbed rim 5b on the base 5, in cooperation with the set-back position of the rim 3a of the inner tubular body 3, allows to insert a cardboard or like disk - apt to

- 6 -                                    0 164 021

bear the indication of the make or of the features of the thread wound on the reel – onto at least one end of the reel, without resorting to glueing or the like;

– on the other hand, the mold according to the invention has an extremely simple structure as compared to the relatively complicated structure of the reel produced therewith, particularly for what concerns the two-fold problem of the formation of the coaxial tubular bodies and of the retaining toothings positioned substantially perpendicular to the axis of said tubular bodies.

It is anyhow understood that the invention is not limited to the particular embodiment heretofore described and illustrated, but that many variants can be provided differing from the same, all within reach of a technician skilled in the art and all thus falling within the protection scope of the invention itself.

CLAIMS

1) Reel for sewing threads, characterized in that it is formed of an outer tubular body terminating, at least at one of its ends, with a flange collar, and of an inner tubular body, coaxial to the first body and terminating, beyond said collar, with a base shortly spaced from the collar in an axial sense, the two tubular bodies being reciprocally connected by interposed radial walls, a slit for introducing the thread being formed between the base and the collar and opposite toothings projecting across said slit for locking said thread therein.

2) Reel as in claim 1), wherein said base is connected to the inner tubular body through radial walls coplanar with said radial walls connecting the coaxial tubular bodies.

3) Reel as in claim 2), wherein the coplanar radial walls, connecting the two coaxial tubular bodies and, respectively, the inner tubular body and the base, terminate with mutually opposed rims forming in turn toothings for retaining the thread.

4) Reel as in claim 1), wherein said base has a conical beveled surface in correspondence of said slit for introducing the thread and facing said collar.

5) Reel as in claim 1), wherein said toothings for retaining the thread consist of substantially radial bridge ties, extending between the inner tubular body and the inner rim of the collar or, respectively, the inner rim of the conical surface of the base.

6) Mold for the production of a reel as in any one of the preceding claims, characterized in that it comprises a female element, which determines the outer surface of the reel, and two male elements to be introduced through the reel axis, from opposite ends thereof, a first male element being formed of a central cylinder, determining the inner surface of the inner tubular body of the reel, and of at least one rod along the side

**0 164 021**

of said cylinder having a part of circle ring section, and a second male element being formed of at least one rod having a part of circle ring section.

7) Mold as in claim 6), wherein the rods of one of the male elements, having a part of circle ring section, alternate - when the mold is closed - with the rods of the other male element.

8) Mold as in claim 6) or 7), wherein the over-all circumferential development of the alternate rods of the first and of the second male element is of 360°, including the free intermediate section corresponding to the radial walls of the reel.

9) Mold as in claim 6), wherein the first male element comprises a central cylinder and two rods along the side thereof, having sections with a circumferential development of about 90° and lying diametrically opposite, the second male element being in turn formed of two rods having sections with a circumferential development of about 90° and lying diametrically opposite and offset by 90° in respect of the rods of the first male element.

0 164 021

Fig.1

Fig.2

# Fig. 3a

# Fig. 3b

12

12a

14

11b

12c

14

11a

11

12

11b

11c

11c

10

11a

11

0 164 021